# EUROPEAN PATENT SPECIFICATION

(11) **EP 4 461 957 B1**
(45) Date of publication and mention of the grant of the patent: **24.09.2025**
(21) Application number: 23799546.9
(22) Date of filing: 07.03.2023
(51) Int. Cl.: F04B 39/14, F04B 35/04, F04B 39/12, F04B 39/02, F04B 49/06, H02K 5/22, H02K 7/14, H02K 11/30

(54) **COMPRESSOR**
VERDICHTER
COMPRESSEUR

(30) Priority: 02.05.2022 KR 20220054329
(43) Date of publication of application: 13.11.2024
(73) Proprietor: Samsung Electronics Co., Ltd, Suwon-si, Gyeonggi-do 16677 (KR)
(72) Inventor: LIM, Dongseok, Suwon-si, Gyeonggi-do 16677 (KR); SEO, Jongjun, Suwon-si, Gyeonggi-do 16677 (KR); YUN, Mincheol, Suwon-si, Gyeonggi-do 16677 (KR); KIM, Namsu, Suwon-si, Gyeonggi-do 16677 (KR); JEONG, Yongyeon, Suwon-si, Gyeonggi-do 16677 (KR)
(74) Representative: Gulde & Partner
(86) International application number: PCT/KR2023/003061
(87) International publication number: WO 2023/214663

(56) References cited:
- JP-A- 2006 161 703
- JP-A- 2008 102 712
- JP-A- 2012 112 274
- JP-A- 2017 125 504
- KR-B1- 100 597 291
- KR-B1- 100 598 955
- KR-B1- 100 690 152

## Description

### [Technical Field]

The invention relates to a compressor having an improved case structure for a controller controlling a motor.

### [Background Art]

In general, a compressor, which is disclosed e.g. in JP 2017-125504 A, is a mechanical device that compresses air, refrigerant, or various other working gases to increase pressure by receiving power from a power generator, such as an electric motor or turbine and, and is widely used in household appliances, such as refrigerators and air conditioners, as well as in various industries.

Compressors may be classified into different types depending on their compression method and sealing structure.

Depending on the compression method, compressors are divided into reciprocating compressors, rotary compressors, and scroll compressors.

Among reciprocating compressors, for example, a sealed reciprocating compressor includes a compression mechanism that compresses refrigerant through the reciprocating motion of a piston and an electric mechanism that drives the compression mechanism, wherein the compression mechanism and the electric mechanism are installed in a single sealed case.

A compressor may include a compressor case, a motor which is an electric mechanism provided inside the compressor case, and a controller connected to the compressor case to control the motor.

The controller may include a case forming an exterior, a board controlling the power supplied to the motor of the compressor, a cluster connected to a connection terminal provided in the compressor case, and a wire connecting the board and the connection terminal. Exposing the cluster to the outside of the case may cause problems with insect entering the cluster.

In addition, the controller may require assembly of the controller case to compressor case after connecting the cluster to the connection terminal, which may complicate the assembly by dividing it into two steps.

### [Disclosure]

### [Technical Problem]

Provided is a compressor having an improved structure of a controller case such that a cluster is assembled within the controller case.

Further, provided is a compressor in which the structure of a controller case is improved so as to facilitate assembly of a cluster.

Further, provided is a compressor in which the structure of a controller case and a compressor case is improved so as to facilitate assembly of a controller to the compressor case.

### [Technical Solution]

According to the invention, a compressor includes a compressor case equipped with a BLDC motor therein and a connection terminal for receiving power from the BLDC motor, and a controller fastened to the compressor case to control the power supplied to the BLDC motor, wherein the controller includes a cluster connected to the connection terminal, and a controller case fastened to the compressor case and including a cluster assembly therein to which the cluster is assembled to prevent the cluster from being exposed to the outside, wherein the cluster assembly includes a plurality of hooks for securing the cluster, and a guide configured to guide so that the cluster is inserted horizontally based on a lower surface of the controller case and then rotated and secured vertically.

The plurality of hooks may include a first hook securing a front portion of a lower surface of the cluster and a pair of second hooks securing both sides of a central portion of the lower surface of the cluster.

The cluster may include a wire connector connected to a board inside the controller by a wire, a connection hole connected to the connection terminal, and a fixing groove into which the cluster is inserted horizontally based on the lower surface of the controller case and then rotated and secured to the first hook.

The wires may be provided in a plurality, and the connection holes and the connection terminals may be formed in a plurality corresponding to the number of the wires.

The cluster assembly may include a plurality of openings formed at positions corresponding to the plurality of connection holes and allowing the plurality of connection terminals to be connected to the plurality of connection holes.

The guide may be formed to be recessed from an inside of the controller case toward the outside so as to have a U-shape with an open top based on the lower surface of the controller case.

The first hook may be positioned at a lower portion of the guide, and the pair of second hooks may be positioned at an upper portion of the first hook inside the guide.

The cluster may be inserted into the lower portion of the guide to allow a portion of the first hook to be received in the fixing groove, and then rotated to allow the cluster to be received entirely within the guide, so that the fixing groove may be secured to the first hook and both sides of the central portion of the cluster are secured to the pair of second hooks.

The wire may be connected to the board inside the controller through the open top of the guide.

The compressor case may include a controller assembly to which the controller is assembled, and the controller case may include a compressor assembly to which the controller assembly is assembled.

The controller assembly may be formed from a steel material and around the connection terminal, and include a first fastening hole to which the compressor assembly is fastened by a fastening member, and an assembling hook to be inserted into the compressor assembly.

The compressor assembly may be formed around the cluster assembly, and include a second fastening hole fastened to the first fastening hole by the fastening member, and an assembling hole into which the assembling hook is inserted and assembled.

A position at which the controller is assembled to the compressor case may be guided based on the cluster being connected to the connection terminal.

In response to the cluster being connected to the connection terminal, the assembling hook may be inserted into the assembling hole to be assembled, and the positions of the first fastening hole and the second fastening hole may be aligned, thereby being fastened by the fastening member.

The compressor assembly may be formed to have a square-shape around the cluster assembly, and include a flange having a square-shaped edge protruding toward the compressor case to ensure that the cluster assembly is sealed from the outside when the controller is assembled to the compressor case.

### [Advantages Effects]

According to one or more embodiments, the cluster may be assembled within the interior of the controller case to prevent insect entering the cluster.

Further, according to one or more embodiments, the structure of the cluster assembly provided inside the controller case may be improved to facilitate assembly of the cluster.

Further, according to one or more embodiments, when assembling the controller to the compressor case, the cluster may be connected to the connection terminal and the controller case may be assembled to the compressor case at the same time to facilitate assembly.

Further, according to one or more embodiments, when the controller case is assembled to the compressor case, the space between the controller case and the compressor case may be sealed to prevent insect infiltration and water splashing into the interior.

Further, according to one or more embodiments, the controller may be assembled securely to the compressor case.

### [Description of Drawings]

FIG. 1 is a view illustrating a compressor according to an embodiment.
FIG. 2 is a cross-sectional view schematically illustrating the compressor with a controller disconnected, according to an embodiment.
FIG. 3 is a view illustrating a compressor case and the controller separated, according to an embodiment.
FIG. 4 is a view illustrating a controller case of the controller separated from the controller according to an embodiment.
FIG. 5 is an enlarged view illustrating a cluster assembly according to an embodiment.
FIG. 6 is a view of a cluster being inserted horizontally into the cluster assembly, according to an embodiment.
FIG. 7 is a cross-sectional view illustrating the cluster being inserted horizontally into the cluster assembly, according to an embodiment.
FIG. 8 is a view illustrating the cluster according to an embodiment being inserted horizontally into the cluster assembly and then guided by a guide to be rotated vertically.
FIG. 9 is a cross-sectional view illustrating the cluster, according to an embodiment, being inserted horizontally into the cluster assembly and then guided by the guide to be rotated vertically.
FIG. 10 is a view illustrating the cluster according to an embodiment being guided by the guide, rotated vertically, and secured to a plurality of hooks.
FIG. 11 is a cross-sectional view illustrating the cluster, according to an embodiment, being guided by the guide, rotated vertically, and secured to the plurality of hooks.
FIG. 12 is a view of the controller, according to an embodiment, being assembled to the compressor case.
FIG. 13 is a view illustrating the controller according to an embodiment assembled in the compressor case.

### [Modes of the Invention]

Embodiments described in the disclosure and configurations shown in the drawings are merely examples of the embodiments of the disclosure and may be modified in various different ways at the time of filing of the present application to replace the embodiments and drawings of the disclosure.

In connection with the description of the drawings, similar reference numerals may be used for similar or related components.

Also, the terms used herein are used to describe the embodiments and are not intended to limit and/or restrict the disclosure. The singular forms "a," "an" and "the" are intended to include the plural forms as well, unless the context clearly indicates otherwise. In this disclosure, the terms "including", "having", and the like are used to specify features, figures, steps, operations, elements, components, or combinations thereof, but do not preclude the presence or addition of one or more of the features, figures, steps, operations, elements, components, or combinations thereof.

It will be understood that, although the terms "first", "second", "primary", "secondary", etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and/or" includes a plurality of combinations of relevant items or any one item among a plurality of relevant items.

The terms "front end", "rear end", "upper", "lower" , "front", "rear", "top", and "bottom" as used in the following description may be defined with reference to the drawings, and the shape and position of each component is not limited by these terms.

Embodiments of the present disclosure will be described in detail below with reference to the accompanying drawings.

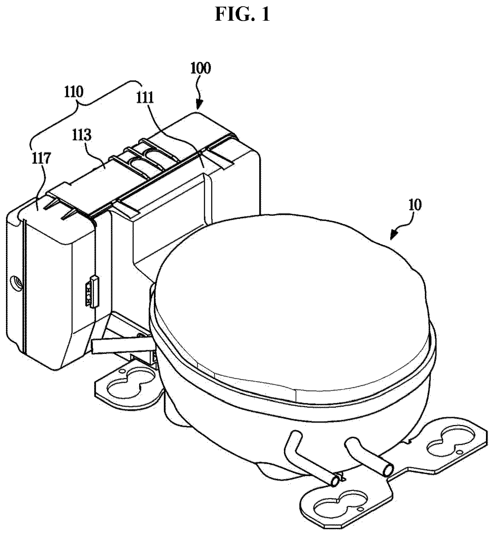

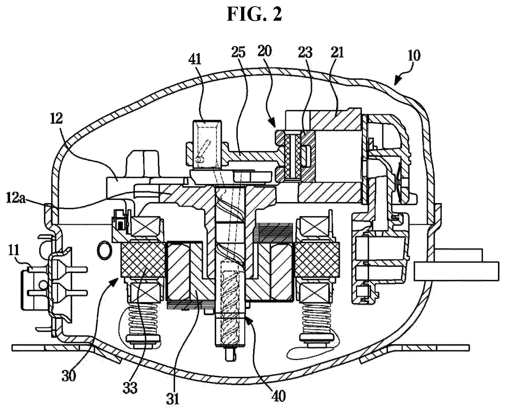

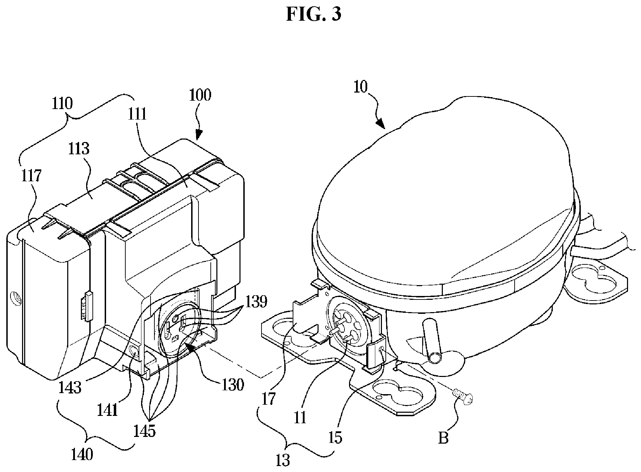

FIG. 1 is a view illustrating a compressor according to an embodiment. FIG. 2 is a cross-sectional view schematically illustrating the compressor with a controller disconnected, according to an embodiment. FIG. 3 is a view illustrating a compressor case and the controller separated, according to an embodiment.

As shown in FIGS. 1 to 3, the compressor may include a compression mechanism 20 that compresses a refrigerant through the reciprocating motion of a piston 23, and a compressor case 10 in which a motor 30, an electric mechanism that drives the compression mechanism 20, is provided. The compressor case 10 may be a sealed case.

The compressor may include a frame 12 for securing various components within the compressor case 10, the compression mechanism 20 installed on an upper side of the frame 12, the motor 30 which is the electric mechanism mounted installed on a lower side of the frame 12 for driving the compression mechanism 20, and a rotating shaft 40 disposed in a vertical direction to transmit a driving force of the motor 30 to the compression mechanism 20 and rotatably supported on an axial support 12a of the frame 12.

The compression mechanism 20 may include a cylinder 21 that forms a compression space for the refrigerant and is secured to the frame 12, the piston 23 that advances and retreats inside the cylinder 21 and compresses the refrigerant, and a connecting rod 25 that connects an eccentric portion 41 and the piston 23.

The motor 30 may be a brushless direct current (BLDC) motor. In other words, the motor 30 may be a DC motor using direct current (DC) voltage, but without brushes.

The motor 30 may include a stator 33 fixed to the frame 12, and a rotor 31 rotating on an inner side of the stator 33. The rotor 31 may include a hollow space in which the rotating shaft 40 may be received. The rotating shaft 40 may be press-fitted into the hollow space of the rotor 31 and may rotate together with the rotor 31.

The rotating shaft 40 may include the eccentric portion 41 that is eccentric to the central axis of rotation. The eccentric portion 41 may be connected to the piston 23 by the connecting rod 25 to allow a rotational movement of the rotating shaft 40 to be converted into a linear translational movement of the piston 23.

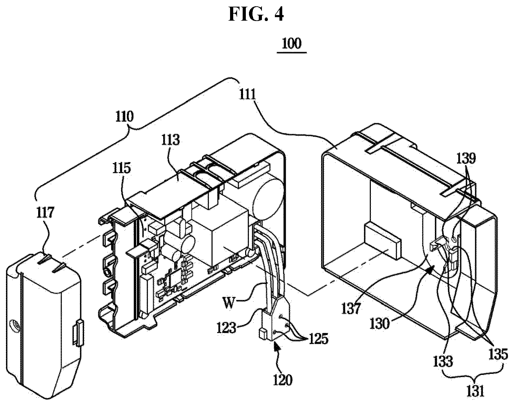

The compressor case 10 may include a connection terminal 11 for supplying power to the motor 30. The connection terminal 11 may be provided in a plurality. A cluster 120 (see FIG. 4) of a controller 100, which will be described below, may be connected to the plurality of connection terminals 11 to control the power supplied to the motor 30 through the controller 100.

The compressor case 10 may include a controller assembly 13 in which the controller 100 is assembled. The controller assembly 13 may be formed around the plurality of connection terminals 11. The controller assembly 13 may be formed from a steel material.

The controller assembly 13 may include a first fastening hole 15 to which the controller 100 is fastened by a fastening member B. The controller assembly 13 may include an assembling hook 17 that is inserted into and assembled with the controller 100. The first fastening hole 15 and the assembling hook 17 will be described in more detail below.

The compressor may include the controller 100 that is fastened to the compressor case 10 and is configured to control power supplied to the motor 30 arranged within the compressor case 10.

The controller 100 may include a controller case 110 forming an exterior. The controller case 110 may include a first case 111, a second case 113, and a side case 117.

The first case 111 is a portion that is assembled to the compressor case 10 and may include a cluster assembly 130 to which the cluster 120 is assembled. The cluster assembly 130 will be described in more detail below.

The first case 111 may include a compressor assembly 140 that is assembled to the compressor case 10. The compressor assembly 140 may be assembled to the controller assembly 13 formed in the compressor case 10. The compressor assembly 140 may be formed to have a square shape around the cluster assembly 130 of the first case 111.

The compressor assembly 140 may include a second fastening hole 141 that is fastened to the first fastening hole 15 of the controller assembly 13 by the fastening member B. The compressor assembly 140 may include an assembling hole 143 into which the assembling hook 17 of the controller assembly 13 is inserted and assembled. The second fastening hole 141 and the assembling hole 143 will be described in more detail below.

The compressor assembly 140 may include a flange 145 having a square-shaped edge protruding toward the compressor case 10. The flange 145 may be formed over the entire square-shape edge. The flange 145 may be in close contact with the compressor case 10 to ensure that the cluster assembly 130 is sealed from the outside when the controller 100 is assembled to the compressor case 10. Because the cluster assembly 130 is sealed from the outside by the flange 145, it is possible to prevent insects and the like from entering the cluster 120 (see FIG. 4) through the cluster assembly 130.

In addition, based on the cluster assembly 130 being sealed from the outside by the flange 145, water splashing into the cluster 120 (see FIG. 4) through the cluster assembly 130 may be prevented. In other words, in the event that the compressor is used in a refrigerator, the compressor is placed in a machine room positioned at a lower portion of the refrigerator, water may fall to the floor and splash onto the cluster assembly 130. The flange 145 may seal the cluster assembly 130 from the outside, thereby preventing water from splashing and entering the cluster 120 (see FIG. 4).

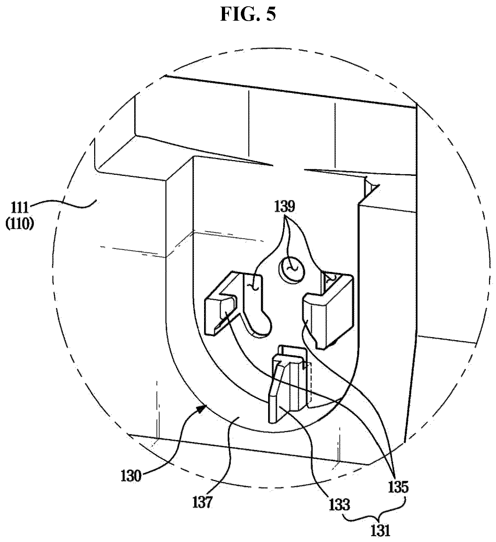

FIG. 4 is a view showing the controller case of the controller being separated from the controller according to an embodiment. FIG. 5 is an enlarged view showing the cluster assembly according to an embodiment.

As shown in FIGS. 4 and 5, the controller 100 may include the cluster 120 connected to the plurality of connection terminals 11 (see FIG. 3) formed on the compressor case 10. The cluster 120 may connect the controller 100 and the compressor case 10 (see FIG. 3) to control the power supplied to the motor 30 (see FIG. 2) arranged inside the compressor case 10 (see FIG. 3).

The cluster 120 may include a wire connector 123 connected to a board 115 assembled in the second case 113 by a wire W. The wire connector 123 may be provided on a rear side of the cluster 120. The wire W connecting the board 115 and the cluster 120 may be provided in a plurality. Three wires W are shown in the drawings, but the present disclosure is not limited thereto. The wire connectors 123 may be provided in a number corresponding to the number of wires W.

The cluster 120 may include a connection hole 125 connected to the connection terminals 11 of the compressor case 10 (see FIG. 3). The connection holes 125 may be provided in a plurality. In response to the plurality of connection holes 125 being formed, the plurality of connection terminals 11 (see FIG. 3) to which the connection holes 125 are connected may also be formed. In other words, the connection holes 125 and the connection terminals 11 (see FIG. 3) may be formed to have a corresponding number of wires W. In the drawings, three connection holes 125 and three connection terminals 11 (see FIG. 3) are shown, but the present disclosure is not limited thereto.

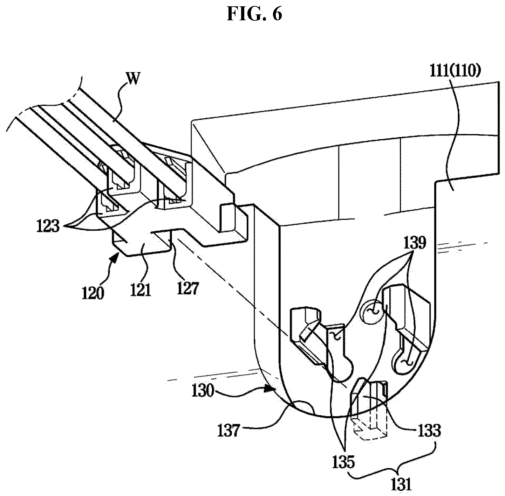

The cluster 120 may include a fixing groove 127 (see FIG. 6) secured to a first hook 133 of the cluster assembly 130. The fixing groove 127 may be provided on a lower surface of the cluster 120. The fixing groove 127 may be provided in a front portion of the lower surface of the cluster 120. The configuration in which the first hook 133 is fixed to the fixing groove 127 will be described in more detail below.

The controller 100 may include the cluster assembly 130 in which the cluster 120 is assembled. The cluster assembly 130 may be formed in the first case 111. The cluster assembly 130 may be formed on an interior of the first case 111. The cluster assembly 130 may be formed on the interior of the case 110 to prevent the cluster 120 from being exposed to the outside. By preventing the cluster 120 from being exposed to the outside, insects and the like may be prevented from infiltrating the cluster 120.

The cluster assembly 130 may include a plurality of hooks 131 for securing the cluster 120. Although the plurality of hooks 131 is shown in the drawings as forming three hooks, but the present disclosure is not limited thereto.

The plurality of hooks 131 may include the first hook 133 that secures the front portion of the lower surface 121 (see FIG. 6) of the cluster 120. When the cluster 120 is assembled to the cluster assembly 130, the first hook 133 may engage the fixing groove 127 formed on the front portion of the lower surface 121 of the cluster 120 to secure the cluster 120.

The plurality of hooks 131 may include a pair of second hooks 135 that secure both side surfaces of a central portion of the lower surface 121 (see FIG. 6) of the cluster 120. When the cluster 120 is assembled to the cluster assembly 130, the pair of second hooks 135 may be engaged with the lower surface 121 of the cluster 120 to secure the cluster 120.

Because the cluster 120 is assembled by engaging the plurality of hooks 131 formed in the cluster assembly 130, the cluster 120 may be easily assembled to the cluster assembly 130.

The cluster assembly 130 may include a guide 137 provided to guide the assembly of the cluster 120. The guide 137 may be formed to have a U-shape with an open top based on the lower surface of the case 110. The guide 137 may be formed to be recessed from an inside of the first case 111 toward the outside. The plurality of hooks 131 may be provided inside the guide 137. The first hook 133 of the plurality of hooks 131 may be positioned at a lower portion of the guide 137. A pair of second hooks 135 of the plurality of hooks 131 may be positioned at an upper portion of the first hook 133 inside the guide 137.

The wire W connected to the cluster 120 may be connected to the board 115 within the controller 100 through the open top of the guide 137.

The cluster assembly 130 may include a plurality of openings 139 formed at positions corresponding to the plurality of connection holes 125 formed in the cluster 120. The plurality of connection terminals 11 (see FIG. 3) may be connected to a plurality of connection holes 125 through the plurality of openings 139.

Although three connection holes 125 and three openings 139 are shown in the drawings, the present disclosure is not limited thereto.

Next, with reference to FIGS. 6 to 11, the operation of assembling the cluster 120 into the cluster assembly 130 will be described in more detail.

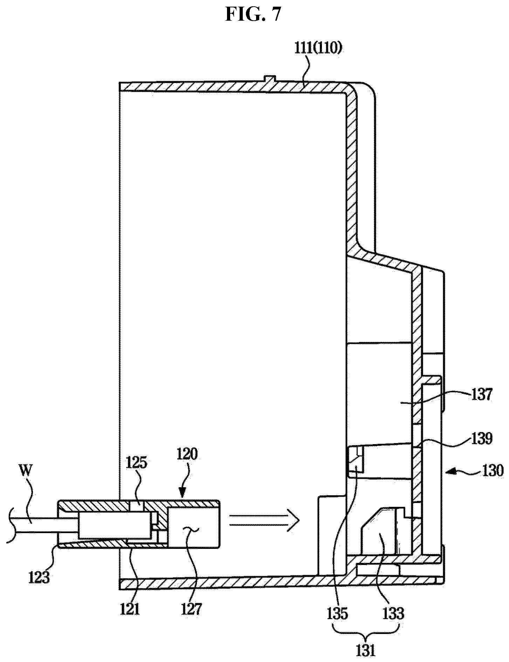

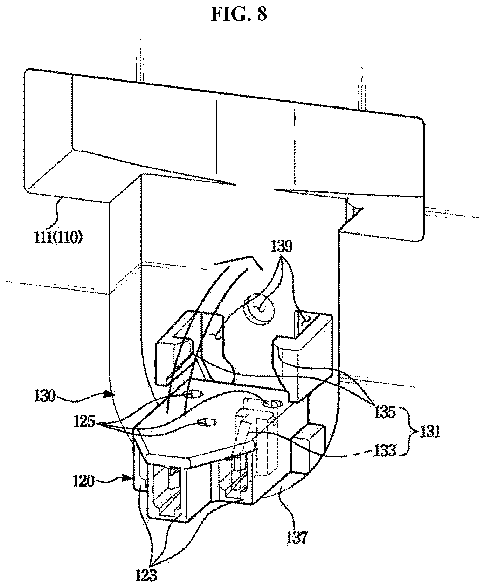

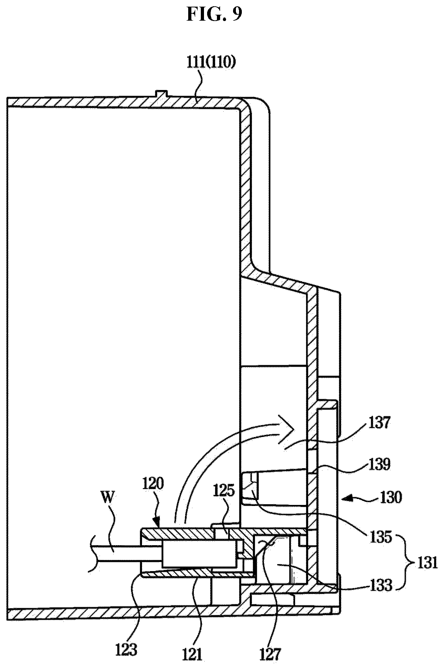

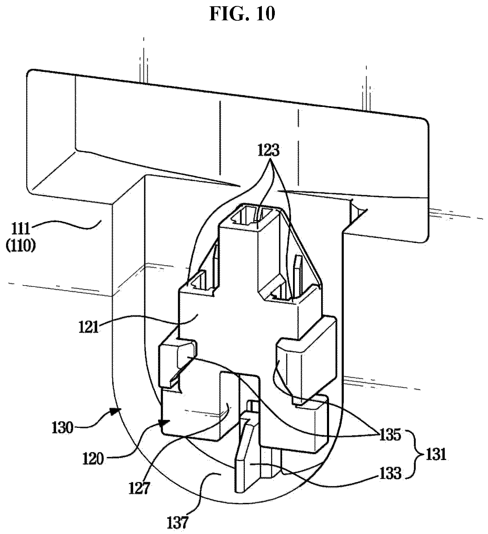

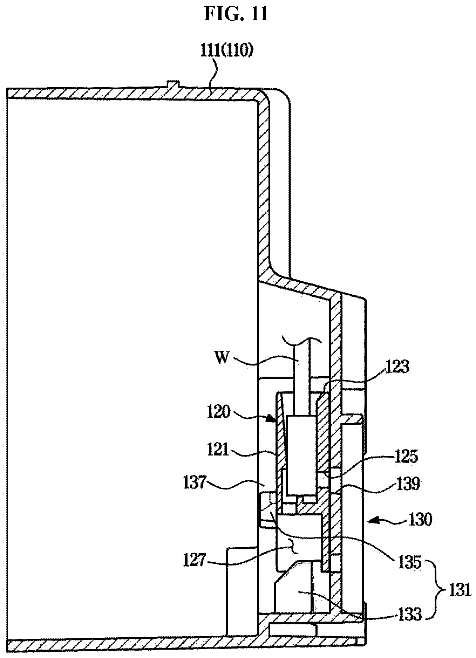

FIG. 6 is a view of a cluster being inserted horizontally into the cluster assembly, according to an embodiment. FIG. 7 is a cross-sectional view illustrating the cluster being inserted horizontally into the cluster assembly, according to an embodiment. FIG. 8 is a view illustrating the cluster according to an embodiment being inserted horizontally into the cluster assembly and then guided by a guide to be rotated vertically. FIG. 9 is a cross-sectional view illustrating the cluster, according to an embodiment, being inserted horizontally into the cluster assembly and then guided by the guide to be rotated vertically. FIG. 10 is a view illustrating the cluster according to an embodiment being guided by the guide, rotated vertically, and secured to a plurality of hooks. FIG. 11 is a cross-sectional view illustrating the cluster, according to an embodiment, being guided by the guide, rotated vertically, and secured to the plurality of hooks.

As shown in FIGS. 6 and 7, the cluster 120 may be horizontally inserted into the cluster assembly 130 based on the lower surface of the case 110. The cluster 120 may be horizontally inserted into the lower portion of the guide 137 based on the lower surface of the case 110. In this case, the cluster 120 may be inserted into the cluster assembly 130 such that a portion of the first hook 133 is received in the fixing groove 127 formed on the front portion of the lower surface 121 of the cluster 120.

As shown in FIGS. 8 and 9, when the cluster 120 is horizontally inserted into the cluster assembly 130 with respect to the lower surface of the case 110, a portion of the first hook 133 may be received in the fixing groove 127. When the front surface of the cluster 120 contacts the recessed surface of the guide 137 by inserting the cluster 120 so that a portion of the first hook 133 is received in the fixing groove 127, the cluster 120 may be rotated vertically. In other words, the cluster 120 may be rotated vertically so that the front side in which the fixing groove 127 is formed is located at the lower portion of the guide 137, and the rear side in which the wire connector 123 is formed is located at the upper portion of the guide 137.

As shown in FIGS. 10 and 11, as the cluster 120 is rotated vertically, the fixing groove 127 may be inserted into the first hook 133, and the front portion of the lower surface 121 of the cluster 120 may be secured to the first hook 133. In the drawings, a front side of the cluster 120 may be a lower side of the cluster 120 as the cluster 120 is rotated.

In response to the cluster 120 being rotated by 90 degrees, the cluster 120 may contact the recessed surface of the guide 137. In other words, when the cluster 120 is rotated by 90 degrees, the upper surface of the cluster 120 in which the connection hole 125 is formed may contact the recessed surface of the guide 137. At this time, the cluster 120 may be secured by inserting the front portion of the lower surface 121 into the first hook 133. In addition, the cluster 120 may be secured by engaging each side of the central portion of the lower surface 121 into each of the pair of second hooks 135. When the cluster 120 is secured by the plurality of hooks 131, the cluster 120 may be received entirely within the guide 137.

In other words, when the cluster 120 is rotated vertically after the cluster 120 is inserted horizontally so that the front surface of the cluster 120 contacts the recessed surface of the guide 137, the cluster 120 may be assembled by securing it to the plurality of hooks 131. Since the cluster 120 may be assembled to the cluster assembly 130 through a simple operation as described above, assembly of the cluster 120 may be facilitated.

Once the cluster 120 is assembled to the cluster assembly 130, the plurality of connection holes 125 formed in the cluster 120 may be in a state where they may be connected to the plurality of connection terminals 11 formed in the compressor case 10 through the plurality of openings 139 formed in the cluster assembly 130.

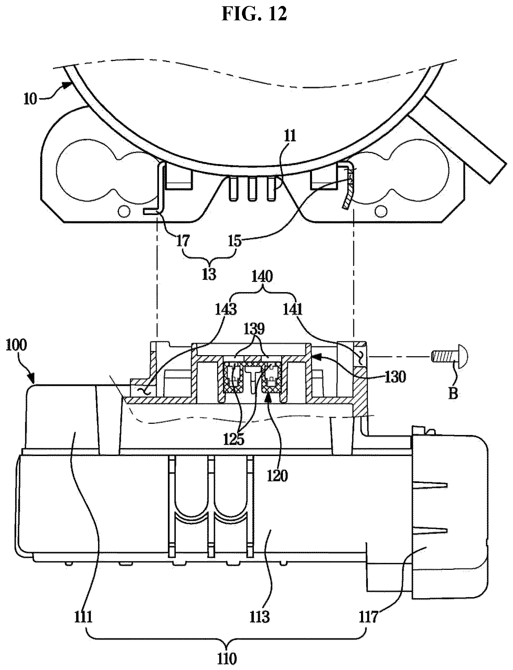

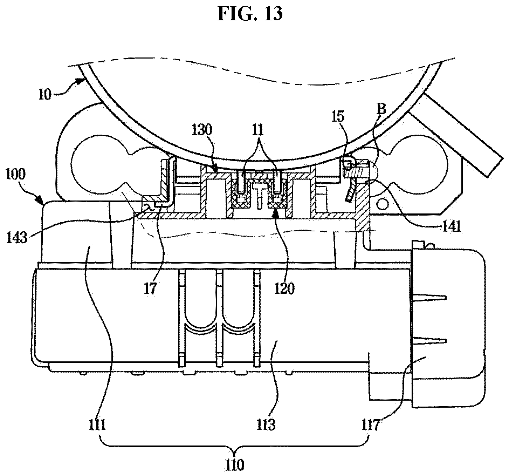

Next, with reference to FIGS. 12 and 13, the operation of assembling the controller 100 to the compressor case 10 will be described in more detail.

FIG. 12 is a view showing the controller according to an embodiment being assembled to the compressor case. FIG. 13 is a view showing the controller according to an embodiment being assembled in the compressor case.

As shown in FIG. 12, with the cluster 120 assembled to the cluster assembly 130, the controller 100 may be moved toward the compressor case 10 such that the plurality of connection terminals 11 of the compressor case 10 is inserted into the plurality of connection holes 125 of the cluster 120.

As shown in FIG. 13, once the plurality of connection terminals 11 of the compressor case 10 is inserted into the plurality of connection holes 125 of the cluster 120, a position at which the controller 100 is assembled to the compressor case 10 may be guided. In other words, based on the plurality of connection holes 125 of the cluster 120 and the plurality of connection terminals 11 of the compressor case 10 being connected, the position at which the controller 100 is assembled to the compressor case 10 may be guided.

As a result, when the plurality of connection holes 125 of the cluster 120 and the plurality of connection terminals 11 of the compressor case 10 are connected, the controller assembly 13 formed in the compressor case 10 may be in a position to be assembled to the compressor assembly 140 formed in the controller case 110 without the need to adjust the position of the controller 100.

In other words, the first fastening hole 15 of the controller assembly 13 may be located at a position corresponding to the second fastening hole 141 of the compressor assembly 140. In addition, the assembling hook 17 of the controller assembly 13 may be inserted into and secured to the assembling hole 143 of the compressor assembly 140. As described above, based on the assembling hook 17 of the controller assembly 13 being inserted into the assembling hole 143 of the compressor assembly 140 and the positions of the first fastening hole 15 of the controller assembly 13 and the second fastening hole 141 of the compressor assembly 140 being aligned, the first fastening holes 15 and the second fastening holes 141 may be fastened by the fastening member B.

As described above, in response to the cluster 120 being connected to the plurality of connection terminals 11 of the compressor case 10, the controller 100 may be guided to a position where it may be assembled to the compressor case 10 without separate position adjustment, thereby facilitating assembly of the controller 100 to the compressor case 10.

When the controller 100 is assembled to the compressor case 10, the flange 145 of the controller 100 may be in close contact with the compressor case 10, so that the cluster assembly 130 may be sealed from the outside. When the cluster assembly 130 is sealed from the outside by the flange 145, insects and the like may be prevented from entering the cluster 120 through the cluster assembly 130 (see FIG. 2).

Furthermore, since the assembling hook 17 is arranged on the controller assembly 13 formed from the steel material, the assembling hole 143 in which the assembling hook 17 is assembled is provided on the compressor assembly 140 of the controller 100 that is assembled to the controller assembly 13, the controller 100 may be firmly assembled to the compressor case 10.

Although certain example embodiments are illustrated and described above, the present disclosure is not limited to the certain embodiments, various applications may of course be performed by those skilled in the art without deviating from what is claimed in the scope of claims, and such applications should not be understood separately from the technical idea or prospects herein.

## Claims

1. A compressor, comprising:
a compressor case (10) equipped with a brushless direct current, BLDC, motor therein and a connection terminal for receiving power from the BLDC motor; and
a controller (100) fastened to the compressor case (10) to control the power supplied to the BLDC motor;
wherein the controller (100) comprises:
a cluster (120) connected to the connection terminal, and
a controller case (110) fastened to the compressor case (10) and including a cluster assembly (130) therein to which the cluster (120) is assembled to prevent the cluster (120) from being exposed to the outside,
wherein the cluster assembly (130) comprises:
a plurality of hooks (131) for securing the cluster (120),
**characterized in that** the cluster assembly (130) comprises:
a guide (137) configured to guide (137) so that the cluster (120) is inserted horizontally based on a lower surface (121) of the controller case (110) and then rotated and secured vertically.

2. The compressor of claim 1, wherein the plurality of hooks (131) includes a first hook (133) securing a front portion of a lower surface (121) of the cluster (120) and a pair of second hooks (135) securing both sides of a central portion of the lower surface (121) of the cluster (120).

3. The compressor of claim 2, wherein the cluster (120) includes a wire connector (123) connected to a board (115) inside the controller (100) by a wire, a connection hole (125) connected to the connection terminal, and a fixing groove (127) into which the cluster (120) is inserted horizontally based on the lower surface (121) of the controller case (110) and then rotated and secured to the first hook (133).

4. The compressor of claim 3, wherein the wires are provided in a plurality, and the connection holes (125) and the connection terminals are formed in a plurality corresponding to the number of the wires.

5. The compressor of claim 4, wherein the cluster assembly (130) includes a plurality of openings (139) formed at positions corresponding to the plurality of connection holes (125) and allowing the plurality of connection terminals to be connected to the plurality of connection holes (125).

6. The compressor of claim 3, wherein the guide (137) is formed to be recessed from an inside of the controller case (110) toward the outside so as to have a U-shape with an open top based on the lower surface (121) of the controller case (110).

7. The compressor of claim 6, wherein the first hook (133) is positioned at a lower portion of the guide (137), and the pair of second hooks (135) is positioned at an upper portion of the first hook (133) inside the guide (137).

8. The compressor of claim 7, wherein the cluster (120) is inserted into the lower portion of the guide (137) to allow a portion of the first hook (133) to be received in the fixing groove (127), and then rotated to allow the cluster (120) to be received entirely within the guide (137), so that the fixing groove (127) is secured to the first hook (133) and both sides of the central portion of the cluster (120) are secured to the pair of second hooks (135).

9. The compressor of claim 6, wherein the wire is connected to the board (115) inside the controller (100) through the open top of the guide (137).

10. The compressor of claim 1, wherein the compressor case (10) includes a controller (100) assembly to which the controller (100) is assembled, and the controller case (110) includes a compressor assembly (140) to which the controller (100) assembly is assembled.

11. The compressor of claim 10, wherein the controller (100) assembly is formed from a steel material and around the connection terminal, and includes a first fastening hole (15) to which the compressor assembly (140) is fastened by a fastening member, and an assembling hook (17) to be inserted into the compressor assembly (140).

12. The compressor of claim 11, wherein the compressor assembly (140) is formed around the cluster assembly (130), and includes a second fastening hole (141) fastened to the first fastening hole (15) by the fastening member, and an assembling hole (143) into which the assembling hook (17) is inserted and assembled.

13. The compressor of claim 12, wherein a position at which the controller (100) is assembled to the compressor case (10) is guided based on the cluster (120) being connected to the connection terminal.

14. The compressor of claim 13, wherein in response to the cluster (120) being connected to the connection terminal, the assembling hook (17) is inserted into the assembling hole (143) to be assembled, and the positions of the first fastening hole (15) and the second fastening hole (141) are aligned, thereby being fastened by the fastening member.

15. The compressor of claim 10, wherein the compressor assembly (140) is formed to have a square-shape around the cluster assembly (130), and includes a flange (145) having a square-shaped edge protruding toward the compressor case (10) to ensure that the cluster assembly (130) is sealed from the outside when the controller (100) is assembled to the compressor case (10).

## Patentansprüche

1. Verdichter, umfassend:
ein Verdichtergehäuse (10), das mit einem bürstenlosen Gleichstrom-, BLDC,-Motor und einem Verbindungsanschluss zum Empfangen von Leistung vom BLDC-Motor ausgestattet ist; und
eine am Verdichtergehäuse (10) befestigte Steuerung (100) zum Steuern der dem BLDC-Motor zugeführten Leistung;
wobei die Steuerung (100) umfasst:
einen Cluster (120), der mit dem Verbindungsanschluss verbunden ist, und
ein Steuerungsgehäuse (110), das am Verdichtergehäuse (10) befestigt ist und eine Cluster-Anordnung (130) darin enthält, an der der Cluster (120) montiert ist, um zu verhindern, dass der Cluster (120) nach außen freiliegt,
wobei die Cluster-Anordnung (130) umfasst:
eine Vielzahl von Haken (131) zum Befestigen des Clusters (120),
**dadurch gekennzeichnet, dass** die Cluster-Anordnung (130) umfasst:
eine Führung (137), die konfiguriert ist, um so zu führen, dass der Cluster (120) basierend auf einer Unterseite (121) des Steuerungsgehäuses (110) horizontal eingeführt und dann gedreht und vertikal befestigt wird.

2. Verdichter nach Anspruch 1, wobei die Vielzahl von Haken (131) einen ersten Haken (133), der einen vorderen Abschnitt einer Unterseite (121) des Clusters (120) befestigt, und ein Paar zweiter Haken (135), die beide Seiten eines mittleren Abschnitts der Unterseite (121) des Clusters (120) befestigen, enthält.

3. Verdichter nach Anspruch 2, wobei der Cluster (120) einen Drahtverbinder (123), der mit einer Platine (115) innerhalb der Steuerung (100) durch einen Draht verbunden ist, ein Verbindungsloch (125), das mit dem Verbindungsanschluss verbunden ist, und eine Befestigungsnut (127) enthält, in die der Cluster (120) basierend auf der Unterseite (121) des Steuerungsgehäuses (110) horizontal eingeführt und dann gedreht und am ersten Haken (133) befestigt wird.

4. Verdichter nach Anspruch 3, wobei die Drähte in einer Vielzahl vorgesehen sind und die Verbindungslöcher (125) und die Verbindungsanschlüsse in einer Vielzahl ausgebildet sind, die der Anzahl der Drähte entspricht.

5. Verdichter nach Anspruch 4, wobei die Cluster-Anordnung (130) eine Vielzahl von Öffnungen (139) enthält, die an Positionen ausgebildet sind, die der Vielzahl von Verbindungslöchern (125) entsprechen und es ermöglichen, dass die Vielzahl von Verbindungsanschlüssen, mit der Vielzahl von Verbindungslöchern (125) verbunden wird.

6. Verdichter nach Anspruch 3, wobei die Führung (137) so ausgebildet ist, dass sie von einer Innenseite des Steuerungsgehäuses (110) nach außen hin ausgenommen ist, so dass sie eine U-Form mit einer offenen Oberseite basierend auf der Unterseite (121) des Steuerungsgehäuses (110) aufweist.

7. Verdichter nach Anspruch 6, wobei der erste Haken (133) an einem unteren Abschnitt der Führung (137) positioniert ist und das Paar der zweiten Haken (135) an einem oberen Abschnitt des ersten Hakens (133) innerhalb der Führung (137) positioniert ist.

8. Verdichter nach Anspruch 7, wobei der Cluster (120) in den unteren Abschnitt der Führung (137) eingeführt wird, um zu ermöglichen, dass ein Abschnitt des ersten Hakens (133) in der Befestigungsnut (127) aufgenommen wird, und dann gedreht wird, um zu ermöglichen, dass der Cluster (120) vollständig in der Führung (137) aufgenommen wird, so dass die Befestigungsnut (127) am ersten Haken (133) befestigt wird und beide Seiten des mittleren Abschnitts des Clusters (120) an dem Paar von zweiten Haken (135) befestigt werden.

9. Verdichter nach Anspruch 6, wobei der Draht mit der Platine (115) innerhalb der Steuerung (100) durch die offene Oberseite der Führung (137) verbunden ist.

10. Verdichter nach Anspruch 1, wobei das Verdichtergehäuse (10) eine Steuerungs-(100)-Anordnung enthält, an der die Steuerung (100) montiert ist, und das Steuerungsgehäuse (110) eine Verdichteranordnung (140) enthält, an der die Steuerungs-(100)-Anordnung montiert ist.

11. Verdichter nach Anspruch 10, wobei die Steuerungs-(100)-Anordnung (100) aus einem Stahlmaterial und um den Verbindungsanschluss herum ausgebildet ist und ein erstes Befestigungsloch (15), an dem die Verdichteranordnung (140) durch ein Befestigungselement befestigt wird, sowie einen Montagehaken (17), der in die Verdichteranordnung (140) einzuführen ist, enthält.

12. Verdichter nach Anspruch 11, wobei die Verdichteranordnung (140) um die Cluster-Anordnung (130) herum ausgebildet ist und ein zweites Befestigungsloch (141), das durch das Befestigungselement am ersten Befestigungsloch (15) befestigt ist, und ein Montageloch (143) enthält, in das der Montagehaken (17) eingeführt und montiert wird.

13. Verdichter nach Anspruch 12, wobei eine Position, an der die Steuerung (100) an das Verdichtergehäuse (10) montiert wird, basierend darauf, dass der Cluster (120) mit dem Verbindungsanschluss verbunden wird, geführt wird.

14. Verdichter nach Anspruch 13, wobei als Reaktion auf das Verbinden des Clusters (120) mit dem Verbindungsanschluss der Montagehaken (17) in das zu montierende Montageloch (143) eingeführt wird und die Positionen des ersten Befestigungslochs (15) und des zweiten Befestigungslochs (141) aufeinander ausgerichtet sind, wodurch sie durch das Befestigungselement befestigt werden.

15. Verdichter nach Anspruch 10, wobei die Verdichteranordnung (140) so ausgebildet ist, dass sie eine quadratische Form um die Cluster-Anordnung (130) herum aufweist, und einen Flansch (145) mit einer quadratisch geformten Kante enthält, die in Richtung des Verdichtergehäuses (10) vorsteht, um sicherzustellen, dass die Cluster-Anordnung (130) von außen abgedichtet ist, wenn die Steuerung (100) an das Verdichtergehäuse (10) montiert wird.

## Revendications

1. Compresseur, comprenant :
un boîtier de compresseur (10) équipé d'un moteur à courant continu sans balais, BLDC, et d'une borne de connexion pour recevoir la puissance depuis le moteur BLDC ; et
une commande (100) fixée au boîtier de compresseur (10) pour commander la puissance fournie au moteur BLDC ;
dans lequel la commande (100) comprend :
une grappe (120) connectée à la borne de connexion, et
un boîtier de commande (110) fixé au boîtier de compresseur (10) et comprenant un ensemble de grappes (130) dans celui-ci auquel la grappe (120) est assemblée pour empêcher la grappe (120) d'être exposée à l'extérieur,
dans lequel l'ensemble de grappes (130) comprend :
une pluralité de crochets (131) pour fixer la grappe (120),
**caractérisé en ce que** l'ensemble de grappes (130) comprend :
un guide (137) configuré pour guider (137) de sorte que la grappe (120) soit insérée horizontalement en se basant sur une surface inférieure (121) du boîtier de commande (110), puis tournée et fixée verticalement.

2. Compresseur de la revendication 1, dans lequel la pluralité de crochets (131) comprend un premier crochet (133) fixant une partie avant d'une surface inférieure (121) de la grappe (120) et une paire de deuxièmes crochets (135) fixant les deux côtés d'une partie centrale de la surface inférieure (121) de la grappe (120).

3. Compresseur de la revendication 2, dans lequel la grappe (120) comprend un connecteur de fil (123) connecté à une carte (115) à l'intérieur de la commande (100) par un fil, un trou de connexion (125) connecté à la borne de connexion, et une rainure de fixation (127) dans laquelle la grappe (120) est insérée horizontalement en se basant sur la surface inférieure (121) du boîtier de commande (110), puis tournée et fixée au premier crochet (133).

4. Compresseur de la revendication 3, dans lequel les fils sont fournis dans une pluralité, et les trous de connexion (125) et les bornes de connexion sont formés dans une pluralité correspondant au nombre des fils.

5. Compresseur de la revendication 4, dans lequel l'ensemble de grappes (130) comprend une pluralité d'ouvertures (139) formées à des positions correspondant à la pluralité de trous de connexion (125) et permettant à la pluralité de bornes de connexion d'être connectées à la pluralité de trous de connexion (125).

6. Compresseur de la revendication 3, dans lequel le guide (137) est formé pour être évidé depuis l'intérieur du boîtier de commande (110) vers l'extérieur de manière à avoir une forme de U avec une ouverture de guidage sur la base de la surface inférieure (121) du boîtier de commande (110).

7. Compresseur de la revendication 6, dans lequel le premier crochet (133) est positionné au niveau d'une partie inférieure du guide (137), et la paire de deuxièmes crochets (135) est positionnée au niveau d'une partie supérieure du premier crochet (133) à l'intérieur du guide (137).

8. Compresseur de la revendication 7, dans lequel la grappe (120) est insérée dans la partie inférieure du guide (137) pour permettre à une partie du premier crochet (133) d'être reçue dans la rainure de fixation (127), puis tournée pour permettre à la grappe (120) d'être reçue entièrement dans le guide (137), de sorte que la rainure de fixation (127) soit fixée au premier crochet (133) et que les deux côtés de la partie centrale de la grappe (120) soient fixés à la paire de deuxièmes crochets (135).

9. Compresseur de la revendication 6, dans lequel le fil est connecté à la carte (115) à l'intérieur de la commande (100) à travers la partie supérieure ouverte du guide (137).

10. Compresseur de la revendication 1, dans lequel le boîtier de compresseur (10) comprend un ensemble de commande (100) auquel la commande (100) est assemblée, et le boîtier de commande (110) comprend un ensemble de compresseur (140) auquel l'ensemble de commande (100) est assemblé.

11. Compresseur de la revendication 10, dans lequel l'ensemble de commande (100) est formé à partir d'un matériau en acier et autour de la borne de connexion, et comprend un premier trou de fixation (15) auquel l'ensemble de compresseur (140) est fixé par un élément de fixation, et un crochet d'assemblage (17) à insérer dans l'ensemble de compresseur (140).

12. Compresseur de la revendication 11, dans lequel l'ensemble de compresseur (140) est formé autour de l'ensemble de grappes (130), et comprend un deuxième trou de fixation (141) fixé au premier trou de fixation (15) par l'élément de fixation, et un trou d'assemblage (143) dans lequel le crochet d'assemblage (17) est inséré et assemblé.

13. Compresseur de la revendication 12, dans lequel une position à laquelle la commande (100) est assemblée au boîtier de compresseur (10) est guidée en se basant sur le fait que la grappe (120) est connectée à la borne de connexion.

14. Compresseur de la revendication 13, dans lequel, en réponse à la connexion de la grappe (120) à la borne de connexion, le crochet d'assemblage (17) est inséré dans le trou d'assemblage (143) pour être assemblé, et les positions du premier trou de fixation (15) et du deuxième trou de fixation (141) sont alignées, étant ainsi fixées par l'élément de fixation.

15. Compresseur de la revendication 10, dans lequel l'ensemble de compresseur (140) est formé pour avoir une forme carrée autour de l'ensemble de grappes (130), et comprend une bride (145) ayant un bord de forme carrée faisant saillie vers le boîtier de compresseur (10) pour garantir que l'ensemble de grappes (130) est étanche de l'extérieur lorsque la commande (100) est assemblée au boîtier de compresseur (10).
